# EUROPEAN PATENT SPECIFICATION

(11) **EP 2 757 482 B1**
(45) Date of publication and mention of the grant of the patent: **13.03.2019**
(21) Application number: 12831900.1
(22) Date of filing: 17.08.2012
(51) Int. Cl.: H04W 12/08, H04W 84/18, G06F 21/60, G06F 21/62, H04L 29/06

(54) **ELECTRONIC DEVICE AND SECURITY CONTROL METHOD**
ELEKTRONISCHE VORRICHTUNG UND SICHERHEITSSTEUERVERFAHREN
DISPOSITIF ÉLECTRONIQUE ET PROCÉDÉ DE COMMANDE DE SÉCURITÉ

(30) Priority: 16.09.2011 JP 2011202864
(43) Date of publication of application: 23.07.2014
(73) Proprietor: NEC Corporation, Tokyo 108-8001 (JP)
(72) Inventor: ISHIZUKA Yukari, Kawasaki-shi Kanagawa 211-8666 (JP)
(74) Representative: Vossius & Partner Patentanwälte Rechtsanwälte mbB
(86) International application number: PCT/JP2012/070934
(87) International publication number: WO 2013/038871

(56) References cited:
- EP-A1- 1 569 411
- WO-A1-2007/097439
- JP-A- 2010 198 384
- US-A1- 2010 048 167

## Description

The present invention relates to an electronic device and a security control method.

Currently, there is a system which changes a function (e.g., access permission) to be provided to a user terminal in accordance with positional information of the user terminal (e.g., see Patent Document 1). EP 156 94 11 A1 refers to a computer system, method, and computer program product for controlling data communication in an ad-hoc network, e.g., PICONET, that connects a wireless device and a nearby wireless device.

Patent Document 1: Japanese Unexamined Patent Application, First Publication No. 2007-94548

### SUMMARY OF INVENTION

### Problems to be solved by the Invention

Incidentally, current electronic devices such as mobile phones can execute a variety of applications and have complex forms of use. Therefore, it may be necessary to change settings of security for communication for each application to be executed. However, in technology disclosed in Patent Document 1, setting (e.g., access permission) of security for communication is uniquely determined in accordance with positional information of a user terminal regardless of what application the user terminal is executing.

An exemplary object of the present invention is to provide an electronic device and a security control method capable of solving the above-described problems.

### Means for Solving the Problems

The present invention is defined by the independent claims. Dependent claims refer to preferred embodiments. The present invention has been made to solve the problems described above. One aspect is an electronic device including: a communication unit which communicates with another electronic device; a storage unit which stores setting information of security for communication corresponding to each application; an execution control unit which starts up and executes one application among a plurality of applications used to communicate with the other electronic device and recruit a participant of a community; and a security control unit which reads the setting information corresponding to the application which has been started up from the storage unit and controls security for communication using the communication unit based on the read setting information when the execution control unit starts up the application.

Furthermore, an aspect is a security control method including: starting up and executing, by an electronic device, one application among a plurality of applications used to communicate with another electronic device and recruit a participant of a community; reading, by the electronic device, setting information corresponding to the application that has been started up from a storage unit which stores setting information of security for communication corresponding to each application; and controlling security for communication based on the read setting information.

Furthermore, an aspect is a program which causes a computer of an electronic device to execute: an execution control function which starts up and executes one application among a plurality of applications used to communicate with another electronic device and recruit a participant of a community; and a security control function which reads setting information corresponding to the application that has been started up from a storage unit which stores setting information of security for communication corresponding to each application and controls security for communication based on the read setting information.

### Exemplary Advantage of the Invention

With the present invention, settings of security for communication can be automatically changed for each application to be started up.

### BRIEF DESCRIPTION OF DRAWINGS

FIG. 1 is a block diagram illustrating a configuration of a temporary community system in an exemplary embodiment of the present invention.
FIG. 2 is a schematic diagram illustrating a data structure and a data example of a security setting table stored in a security setting storage unit in the present exemplary embodiment.
FIG. 3 is a schematic diagram illustrating a data structure and a data example of a detailed security setting table stored in the security setting storage unit in the present exemplary embodiment.
FIG. 4 is an image diagram illustrating an example of an application which forms a temporary community in the present exemplary embodiment.
FIG. 5 is a descriptive diagram describing a security setting changing operation in the present exemplary embodiment.
FIG. 6 is a flowchart illustrating a procedure of the security setting changing operation in the present exemplary embodiment.

### MODES FOR CARRYING OUT THE INVENTION

Hereinafter, exemplary embodiments of the present invention will be described in detail with reference to the drawings.

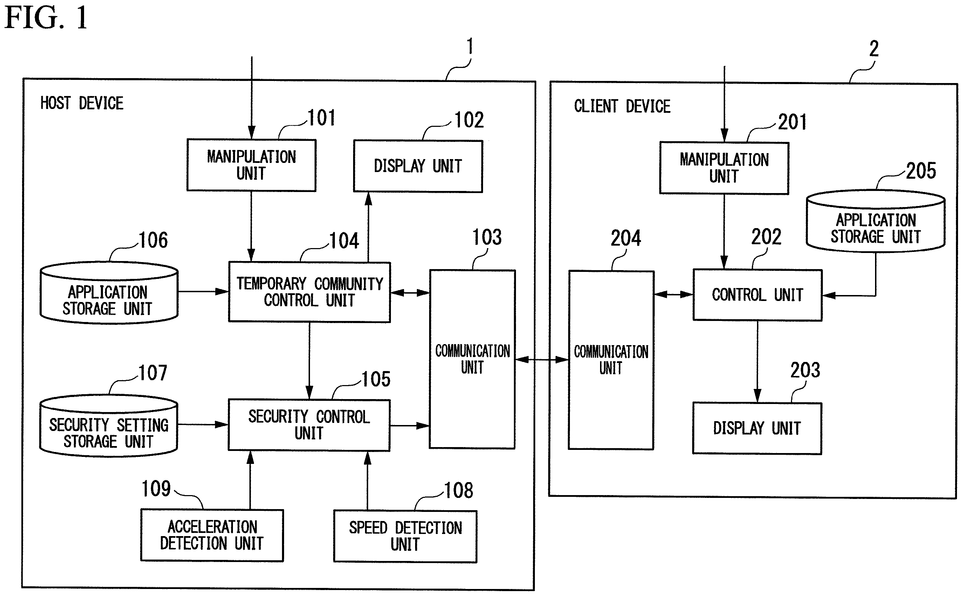

FIG. 1 is a block diagram illustrating a configuration of a temporary community system in the present exemplary embodiment. The temporary community system is a system which forms a temporary community and it is configured to include a host device (electronic device) 1 and one or a plurality of client devices (other electronic devices) 2. The temporary community refers to an ad hoc (temporarily local) community, and, for example, includes a community for co-buyers to shop, a community for sharing of a taxi, a community for sports and games, a community used to exchange information at a live performance or a sporting arena, or the like. A function of forming the temporary community is a function of recruiting participants of the temporary community, and includes a function of looking for a co-buyer during shopping, a function of looking for a partner for sharing of a taxi, a function of looking for a partner for a sport or game on the spot, a function of looking for a partner with whom to exchange information at a live performance or a sporting arena, or the like.

The host device 1 is a terminal apparatus having a function which forms the temporary community and it is, for example, a mobile phone, a PHS (Personal Handy-phone System), a smartphone, a personal computer, or the like. The host device 1 is configured to include a manipulation unit 101, a display unit 102, a communication unit 103, a temporary community control unit (execution control unit) 104, a security control unit 105, an application storage unit 106, a security setting storage unit 107, a speed detection unit 108, and an acceleration detection unit 109.

The manipulation unit 101 receives a manipulation from a user. For example, the manipulation unit 101 receives a manipulation to designate an application for forming a temporary community and start up and execute this application. The application which forms a temporary community is an application which communicates with the client device 2 and recruits participants of the temporary community. Furthermore, the manipulation unit 101 receives an input of a message to be transmitted to the client device 2 through the application. Furthermore, the manipulation unit 101 receives a manipulation to end the application (dissolve the temporary community).

The display unit 102 is, for example, a liquid crystal display and displays various pieces of information. For example, the display unit 102 displays a message or the like received from the client device 2.

The communication unit 103 communicates with the client device 2 using, for example, short-distance wireless communication such as a wireless LAN (Local Area Network) or Bluetooth (registered trademark).

The temporary community control unit 104 starts up and executes the application designated through the manipulation unit 101 to form a temporary community. For example, the temporary community control unit 104 transmits a message for recruiting participants of the temporary community to the client device 2 through the communication unit 103. In other words, the temporary community control unit 104 performs recruitment of participants of the temporary community only for the client device 2 with which the temporary community control unit 104 can communicate using short-distance wireless communication (i.e., the client device 2 within a predetermined distance from the host device 1).

The security control unit 105 controls security of the communication in the communication unit 103. For example, when the temporary community control unit 104 starts up the application, the security control unit 105 reads setting information of security corresponding to the application that has been started up from the security setting storage unit 107 and controls the security of the communication using the communication unit 103 based on the read setting information. Furthermore, when a predetermined condition is satisfied after the application has been started up, the security control unit 105 returns the settings for security to a state before the application is started up. The predetermined condition refers to, for example, the fact that a predetermined time has passed from when the application starts recruitment, the fact that a user has performed a manipulation to end the recruitment of the application, the fact that the number of participants of the temporary community has reached a predetermined number, the fact that the host device 1 has moved a predetermined distance or more from a position at which the application started the recruitment, the fact that acceleration detected using the acceleration detection unit 109 has satisfied a predetermined condition (e.g., the acceleration has exceeded a predetermined value), the fact that a speed detected using the speed detection unit 108 has satisfied a predetermined condition (e.g., the speed has exceeded a predetermined value), the fact that access to data other than data for the recruitment from the client device 2 has been detected, or the like. Here, the security control unit 105 includes a clock unit which counts a time and counts the time from when the application started the recruitment. Furthermore, the security control unit 105 calculates a movement distance based on the acceleration detected by the acceleration detection unit 109.

The application storage unit 106 stores a plurality of applications used to form a temporary community. The applications are different depending on use of the temporary communities, and the applications include, for example, an application which forms a community of co-buyers during shopping, an application which forms a community for sharing of a taxi, an application which forms a community for sports or games, an application which forms a community for information exchange at a live performance or sporting arena, or the like.

The security setting storage unit 107 stores the setting information of security for communication corresponding to each application. Details of the setting information of security will be described below.

The speed detection unit 108 detects the speed of the host device 1.

The acceleration detection unit 109 detects the acceleration of the host device 1.

The client device 2 is a terminal apparatus which participates in the temporary community and it is, for example, a mobile phone, a PHS, a smartphone, a personal computer, or the like. The client device 2 is configured to include a manipulation unit 201, a control unit 202, a display unit 203, a communication unit 204, and an application storage unit 205.

The manipulation unit 201 receives a manipulation from a user. For example, the manipulation unit 201 receives an input of a message to be transmitted to the host device 1.

The display unit 203 is, for example, a liquid crystal display and it displays various pieces of information. For example, the display unit 203 displays a message or the like received from the host device 1.

The communication unit 204 communicates with the host device 1 using, for example, short-distance wireless communication such as a wireless LAN or Bluetooth (registered trademark).

The application storage unit 205 stores an application for participation in the temporary community.

When the control unit 202 receives a message from the host device 1 through the communication unit 204, the control unit 202 starts up and executes an application to perform a process of participating in the temporary community. For example, the control unit 202 displays a message for recruitment of participation in the temporary community received from the host device 1 on the display unit 203. Furthermore, the control unit 202 transmits a message for participation in the temporary community to the host device 1 through the communication unit 204.

It is to be noted that one electronic device may include both a function of the host device 1 and a function of the client device 2.

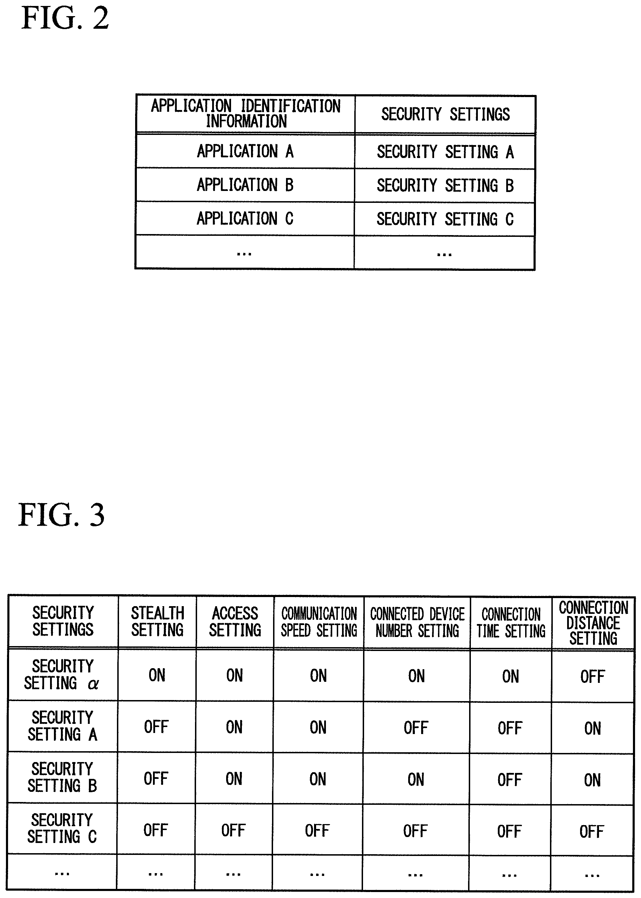

FIG. 2 is a schematic diagram illustrating a data structure and a data example of a security setting table stored in the security setting storage unit 107 in the present exemplary embodiment. The security setting table is data of a two-dimensional table format including rows and columns and it includes items of application identification information and security settings, as illustrated in FIG. 2. This table includes a row for each piece of the application identification information. The application identification information is identification information for identifying each application. The security setting is setting information of security for communication.

In the illustrated example, the security setting corresponding to application identification information "application A" is "security setting A," the security setting corresponding to application identification information "application B" is "security setting B," and the security setting corresponding to application identification information "application C" is "security setting C."

FIG. 3 is a schematic diagram illustrating a data structure and a data example of a detailed security setting table stored in the security setting storage unit 107 in the present exemplary embodiment. The detailed security setting table is data of a two-dimensional table format including rows and columns and it includes items of a security setting, a stealth setting, an access setting, a communication speed setting, a connected device number setting, a connection time setting, and a connection distance setting, as illustrated in FIG. 3. This table includes a row for each security setting.

The stealth setting is a setting which prevents existence of the host device 1 from being detected by the client device 2. For example, when the stealth setting is "ON (set)," the security control unit 105 of the host device 1 communicates with only the client device 2 which holds information for connection to the host device 1 in advance. In other words, if the stealth setting is "ON (set)," the security control unit 105 of the host device 1 does not reply to a connection request from the client device 2 which does not hold the information for connection to the host device 1. In contrast, when the stealth setting is "OFF (reset)," the security control unit 105 of the host device 1 replies to connection requests from all the client devices 2. If the stealth setting is "ON," the host device 1 can prevent connection with the client device 2 looking for an indefinite connection partner.

The access setting is a setting requiring a password or an encryption key for access to the host device 1. For example, when the access setting is "ON (set)," the security control unit 105 of the host device 1 communicates with only the client device 2 authenticated using a predetermined password. Furthermore, when the access setting is "ON (set)," the security control unit 105 of the host device 1 transmits or receives only data encrypted using a predetermined encryption key. Alternatively, when the access setting is "ON (set)," the security control unit 105 of the host device 1 communicates with only the client device 2 having an access right set in advance. If the access setting is "ON," the host device 1 can prevent connection from an indefinite client device 2.

The communication speed setting is a setting which prevents a speed of communication with the client device 2 from exceeding a predetermined value. When the communication speed setting is "ON (set)," the security control unit 105 of the host device 1 performs control so that the speed of the communication with the communicating client device 2 is smaller than the predetermined value. For example, when communication is performed using a wireless LAN, the security control unit 105 limits the communication speed (band) by determining the number of channels to be allocated to the client device 2 which is a communication partner. If the communication speed setting is "ON," the host device 1 can efficiently perform communication, for example, when the host device 1 is connected to a plurality of client devices 2.

The connected device number setting is a setting which prevents the number of client devices 2 which can be connected at the same time from exceeding a predetermined value. For example, if the connected device number setting is "ON (set)," the security control unit 105 of the host device 1 replies to a connection request from another client device 2 only if the number of communicating client devices 2 is smaller than the predetermined value. In other words, the security control unit 105 does not reply to the connection request from the other client devices 2 if the number of communicating client devices 2 is the predetermined value. If the connected device number setting is "ON," the host device 1 can secure the speeds of the communication with the connected client devices 2. Furthermore, if the connected device number setting is "ON," the client device 1 can prevent the client device 1 from connecting to a required number of client devices 2 or more.

The connection time setting is a setting which prevents a connection time of the client device 2 from exceeding a predetermined value. For example, when the connection time setting is "ON (set)," the security control unit 105 of the host device 1 counts a time of communication with each communicating client device 2 and disconnects the communication with the client device 2 if the counted connection time is greater than or equal to the predetermined value. If the connection time setting is "ON," the host device 1 can prevent the host device 1 from connecting to a specific client device 2 unnecessarily for a long period of time.

The connection distance setting is a setting which prevents a distance to the client device 2 from exceeding a predetermined value. For example, when the connection distance setting is "ON (set)," the security control unit 105 of the host device 1 communicates with only the client device 2 whose distance from the host device 1 is within the predetermined value. Furthermore, when the connection distance setting is "ON (set)," the security control unit 105 of the host device 1 disconnects the communication with the communicating client device 2 if the distance from the communicating client device 2 exceeds the predetermined value. Here, the host device 1 measures the distance between the apparatus itself and the client device 2 based on an electric field strength of the communication between the apparatus itself and the client device 2. Alternatively, each of the host device 1 and the client device 2 may include a positional information detection unit such as a GPS (Global Positioning System). In this case, the host device 1 acquires positional information of the client device 2 from the client device 2 and measures the distance between the apparatus itself and the client device 2 based on the acquired positional information of the client device 2 and the positional information of the apparatus itself. If the connection distance setting is "ON," the host device 1 can prevent connection from the client device 2 at a position unnecessarily far from the apparatus itself.

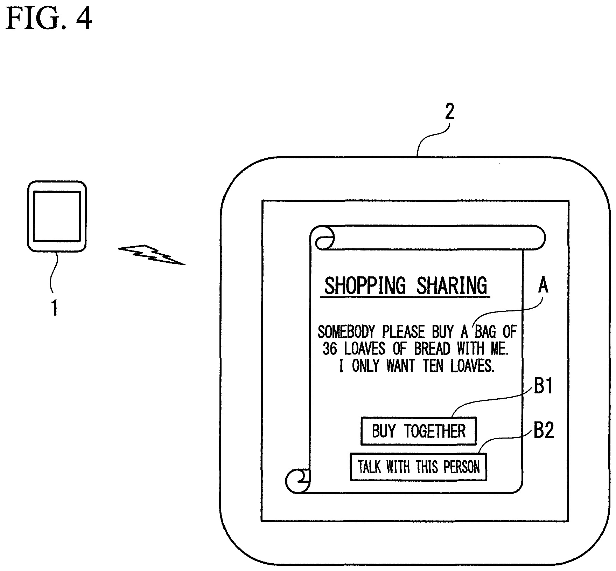

Next, operation of forming a temporary community in the present exemplary embodiment will be described with reference to FIG. 4. FIG. 4 is an image diagram illustrating an example of the application which forms the temporary community in the present exemplary embodiment.

The application in this example is an application having a function of looking for a co-buyer during shopping (hereinafter referred to as an application A). For example, a user A of the host device 1 finds a bag with 36 loaves of bread on a sales floor of a supermarket. The user A desires to buy the bread but only wants ten loaves, and looks for a co-buyer who also wants to buy the bread. Therefore, the user A starts up the application A in the host device 1 and inputs a message A, "Somebody please buy a bag of 36 loaves of bread with me. I only want ten loaves," for recruiting a co-buyer of the bread from the manipulation unit 101. The temporary community control unit 104 transmits the input message A to the client device 2.

When the control unit 202 of the client device 2 receives the message A, the control unit 202 displays the received message A, a "buy together" button B1 for participating in the temporary community, and a "talk with this person" button B2 for transmitting a message to the host device 1 on the display unit 203. If the "buy together" button B1 is pressed, the control unit 202 of the client device 2 transmits a message for participation in the temporary community to the host device 1 through the communication unit 204. When the temporary community control unit 104 of the host device 1 receives the message for participation in the temporary community from the client device 2, the temporary community control unit 104 sets a user B of the client device 2 as a participant of the temporary community. Furthermore, if the "talk with this person" button B2 is pressed, the control unit 202 of the client device 2 displays a screen used to input a message on the display unit 203 and transmits a message B input by the user B on this screen to the host device 1. When the temporary community control unit 104 of the host device 1 receives the message B from the client device 2, the temporary community control unit 104 displays the received message B on the display unit 102.

If the host device 1 and the client device 2 perform communication in this way, the client device 2 can participate in the temporary community formed by the host device 1.

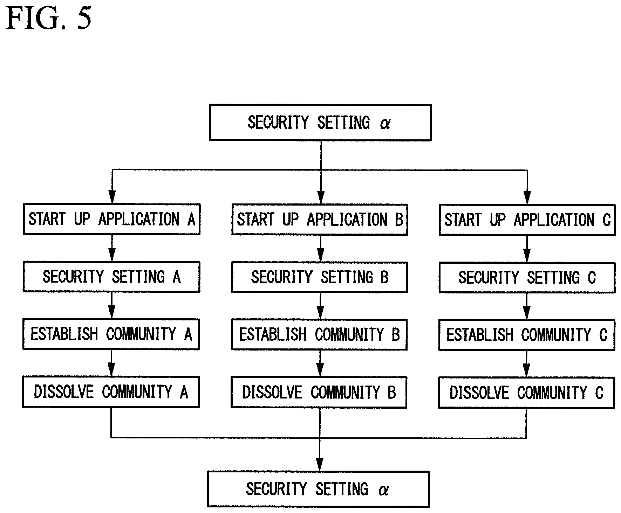

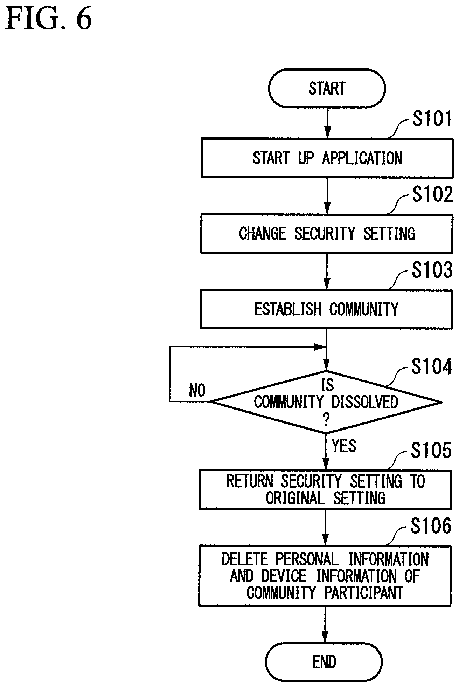

Next, a security setting changing operation performed by the host device 1 of the present exemplary embodiment will be described with reference to FIGS. 5 and 6. FIG. 5 is a descriptive diagram describing a security setting changing operation in the present exemplary embodiment. Here, the normal security setting of the host device 1 is "security setting α."

When the temporary community control unit 104 of the host device 1 starts up an application "application A," the security control unit 105 changes the security setting from "security setting α" to "security setting A." "Security setting A" is setting information on security corresponding to the "application A." "Application A" to be executed by the temporary community control unit 104 then establishes a community A. Thereafter, when the predetermined condition described above is satisfied and the community A is dissolved, the security control unit 105 returns the security setting from "security setting A" to "security setting α."

Similarly, if "application B" is started up, the security control unit 105 changes the security setting from "security setting α" to "security setting B" of "application B." Thereafter, if a community B of "application B" is dissolved, the security control unit 105 returns the security setting from "security setting B" to "security setting α." Furthermore, similarly, if "application C" is started up, the security control unit 105 changes the security setting from "security setting α" to "security setting C" of "application C." Thereafter, if a community C of "application C" is dissolved, the security control unit 105 returns the security setting from "security setting C" to "security setting α."

FIG. 6 is a flowchart illustrating a procedure of the security setting changing operation in the present exemplary embodiment. Hereinafter, an example in which the application A is started up will be described by way of example.

First, the temporary community control unit 104 starts up an application (application A) designated through the manipulation unit 101 (step S101).

Then, the security control unit 105 reads "security setting A", which is a security setting corresponding to the application A which has been started up, from the security setting storage unit 107 and controls communication in the communication unit 103 based on the read "security setting A" (step S102).

The temporary community control unit 104 then executes the application A, which has been started up, and establishes a temporary community (step S103). It is to be noted that personal information and device information of a user participating in the established temporary community are written to a storage unit (not illustrated) of the host device 1.

The security control unit 105 then determines whether the temporary community established in step S103 has been dissolved (step S104). For example, when any of conditions 1 to 6 shown below is satisfied, the security control unit 105 determines that the temporary community has been dissolved.

(Condition 1) A user has performed an end manipulation for participant recruitment for the temporary community (an end manipulation for application A has been performed).

(Condition 2) A predetermined time has passed since the application started recruitment (the predetermined time has passed since application A has been started up).

(Condition 3) The number of participants of the temporary community has reached a predetermined number.

(Condition 4) The host device 1 has moved a predetermined distance or more since the participant recruitment of the temporary community began (since application A has been started up).

(Condition 5) A movement state (acceleration or speed) of the host device 1 has satisfied a predetermined condition.

(Condition 6) Access from the client device 2 to data other than data for participant recruitment of the temporary community has been detected.

If the temporary community is not dissolved (step S104: No), the process returns to step S104. In contrast, if the temporary community is dissolved (step S104: Yes), the security control unit 105 returns the security setting to "security setting α," which is a state before the application is started up (step S105).

Finally, the temporary community control unit 104 terminates the application A, deletes the personal information and the device information of the participant (information on the client device 2) of the temporary community established in step S103 from the storage unit of the host device 1, and terminates the process (step S106).

In this way, in the present exemplary embodiment, the host device 1 changes the setting of security for communication for each application which has been started up. Accordingly, the setting for security can be automatically changed in accordance with a function and a use of the application which has been started up without performing a complex manipulation.

Furthermore, in the present exemplary embodiment, when any one of conditions 1 to 6 described above is satisfied (when the temporary community is dissolved), the host device 1 returns the setting for security to a state before the application is started up. In other words, after the application is terminated, the setting for security automatically returns to a state before the application is started up. Accordingly, to return the setting for security is never forgotten.

Furthermore, a program for realizing each step illustrated in FIG. 6 may be recorded in a computer-readable recording medium, and the program recorded in this recording medium may be loaded and executed on a computer system to perform a process of changing the security settings in accordance with the application that is started up. It is to be noted that "the computer system" stated herein may include an OS (operating system) and hardware such as a peripheral device.

Furthermore, the "computer system" also includes a homepage providing environment (or display environment) if a WWW (World Wide Web) system is being used.

Furthermore, the "computer-readable recording medium" refers to a flexible disk, a magnetic optical disc, a ROM (Read Only Memory), a writable nonvolatile memory such as a flash memory, or a portable medium such as a CD (Compact Disc)-ROM, or a storage apparatus such as a hard disk built into a computer system.

Furthermore, the "computer-readable recording medium" also includes a recording medium that holds a program for a predetermined time, such as a volatile memory (e.g., a DRAM (Dynamic Random Access Memory)) inside a computer system serving as a server or a client when the program is transmitted via a network such as the Internet or a communication line such as a telephone line.

Furthermore, the above-described program may be transmitted from a computer system in which the program is stored in a storage apparatus or the like to other computer systems via a transmission medium or by transmission waves in the transmission medium. Here, the "transmission medium" used to transmit the program refers to a medium having a function of transmitting information, such as a network (communication network) such as the Internet or a communication line such as a telephone line.

Also, the above-described program may be a program for realizing some of the above-described functions. Alternatively, the program may be a program capable of realizing the above-described functions through a combination with a program previously stored in a computer system, i.e., a so-called differential file (a differential program).

While the exemplary embodiments of the present invention have been described in detail with reference to drawings, a specific configuration is not limited to the foregoing configuration, and various design changes or the like can be performed without departing from the gist of the present invention.

For example, while the host device 1 and the client device 2 in the present exemplary embodiment form a temporary community using short-distance wireless communication, the temporary community may be formed using communication using a wide area network such as a mobile telephone network. In this case, the host device 1 and each client device 2 include a positional information detection unit such as a GPS device. The host device 1 performs search and connection distance setting of the client device 2 near the host device 1 based on the positional information detected by the host device 1 and each client device 2.

### INDUSTRIAL APPLICABILITY

The present invention is applicable to, for example, security control in an electronic device. With the present invention, it is possible to automatically change settings of security for communication for each application to be started up.

### Description of Reference Signs

- 1: host device (electronic device)
- 2: client device (another electronic device)
- 101: manipulation unit
- 102: display unit
- 103: communication unit
- 104: temporary community control unit (execution control unit)
- 105: security control unit
- 106: application storage unit
- 107: security setting storage unit
- 108: speed detection unit
- 109: acceleration detection unit
- 201: manipulation unit
- 202: control unit
- 203: display unit
- 204: communication unit
- 205: application storage unit

## Claims

1. An electronic device (1) comprising:
a communication unit (103) which communicates with another electronic device (2);
a storage unit (107) which stores setting information of security for communication corresponding to each application;
an execution control unit (104) which starts up and executes one application among a plurality of applications used to communicate with the other electronic device and recruit a user for participating in a community, where a community system is configured to include the electronic device and the other electronic device; and
a security control unit (105) which reads the setting information corresponding to the application which has been started up from the storage unit and controls security for communication using the communication unit based on the read setting information when the execution control unit starts up the application,
wherein the electronic device (1) is **characterized in that**
the security control unit (105) returns a setting of security for the communication to a setting before the application is started up when a predetermined condition is satisfied after the application is started up,
when a message for participation in the community is received from the other electronic device, a user of the other electronic device is set as the participant of the community,
personal information of the user participating in the community and information on the other electronic device are written to the storage unit of the electronic device,
the setting of security returned to the setting before the application is started up is a security setting corresponding to each application,
when the predetermined condition is satisfied, the personal information and the information on the other electronic device are deleted from the storage unit of the electronic device, and
the predetermined condition comprises a condition in which the number of users who participate in the community system reaches a predetermined number; and a condition in which access from the other electronic device to data other than data for recruitment is detected.

2. The electronic device (1) according to claim 1, wherein the security control unit (105) returns the setting of security for the communication to the setting before the application is started up when a predetermined time passes after the application starts recruitment.

3. The electronic device (1) according to claim 1 or 2, wherein the security control unit (105) returns the setting of security for the communication to the setting before the application is started up when a manipulation used to terminate recruitment of the application is performed.

4. The electronic device (1) according to any one of claims 1 to 3, wherein the security control unit (105) returns the setting of security for the communication to the setting before the application is started up when the electronic device moves a predetermined distance or more from a position at which the application starts recruitment.

5. The electronic device (1) according to any one of claims 1 to 4, comprising an acceleration detection unit (109) which detects acceleration of the electronic device,
wherein the security control unit (105) returns the setting of security for the communication to the setting before the application is started up when the acceleration detected using the acceleration detection unit satisfies a predetermined condition.

6. The electronic device (1) according to any one of claims 1 to 5, comprising a speed detection unit (108) which detects a speed of the electronic device,
wherein the security control unit (105) returns the setting of security for the communication to the setting before the application is started up when the speed detected using the speed detection unit satisfies a predetermined condition.

7. The electronic device (1) according to any one of claims 1 to 6, wherein the storage unit stores a connection distance setting which communicate with only another electronic device present within a predetermined distance from the electronic device as the setting information of security, and
when the execution control unit starts up the application, the security control unit (105) performs control to communicate with only the other electronic device present within the predetermined distance from the electronic device in a case in which the connection distance setting is set for the application that has been started up.

8. A security control method comprising:
starting up and executing, by an electronic device, one application among a plurality of applications used to communicate with another electronic device and recruit a user for participating in a community, where a community system is configured to include the electronic device and the other electronic device;
reading, by the electronic device, setting information corresponding to the application that has been started up from a storage unit which stores setting information of security for communication corresponding to each application; and
controlling security for communication based on the read setting information,
wherein the security control method is **characterized in that**
a setting of security for the communication is returned to a setting before the application is started up when a predetermined condition is satisfied after the application is started up,
when a message for participation in the community is received from the other electronic device, setting a user of the other electronic device as the participant of the community,
writing personal information of the user participating in the community and information on the other electronic device to the storage unit of the electronic device,
the setting of security returned to the setting before the application is started up is a security setting corresponding to each application,
when the predetermined condition is satisfied, deleting the personal information and the information on the other electronic device from the storage unit of the electronic device, and
the predetermined condition comprising a condition in which the number of users who participate in the community system reaches a predetermined number; and a condition in which access from the other electronic device to data other than data for recruitment is detected.

9. A program which causes a computer of an electronic device to execute:
an execution control function which starts up and executes one application among a plurality of applications used to communicate with another electronic device and recruit a user for participating in a community, where a community system is configured to include the electronic device and the other electronic device; and
a security control function which reads setting information corresponding to the application that has been started up from a storage unit which stores setting information of security for communication corresponding to each application and controls security for communication based on the read setting information,
wherein the program is **characterized in that**
the security control function returns a setting of security for the communication to a setting before the application is started up when a predetermined condition is satisfied after the application is started up,
when a message for participation in the community is received from the other electronic device, a user of the other electronic device is set as the participant of the community,
personal information of the user participating in the community and information on the other electronic device are written to the storage unit of the electronic device,
the setting of security returned to the setting before the application is started up is a security setting corresponding to each application,
when the predetermined condition is satisfied, the personal information and the information on the other electronic device are deleted from the storage unit of the electronic device, and
the predetermined condition comprises a condition in which the number of users who participate in the community system reaches a predetermined number; and a condition in which access from the other electronic device to data other than data for recruitment is detected.

## Patentansprüche

1. Elektronische Vorrichtung (1), mit:
einer Kommunikationseinheit (103), die mit einer anderen elektronischen Vorrichtung (2) kommuniziert;
einer Speichereinheit (107), die jeweiligen Anwendungen zugeordnete Sicherheitseinstellungsinformation für eine Kommunikation speichert;
einer Ausführungssteuereinheit (104), die eine Anwendung unter einer Vielzahl von Anwendungen startet und ausführt, die zum Kommunizieren mit der anderen elektronischen Vorrichtung und zum Anwerben eines Benutzers für die Teilnahme an einer Community verwendet werden,
wobei ein Community-System dafür konfiguriert ist, die elektronische Vorrichtung und die andere elektronische Vorrichtung einzubinden; und
einer Sicherheitssteuereinheit (105), die die Einstellungsinformation, die der Anwendung zugeordnet ist, die gestartet worden ist, von der Speichereinheit liest und die Sicherheit für die Kommunikation unter Verwendung der Kommunikationseinheit basierend auf der gelesenen Einstellungsinformation steuert, wenn die Ausführungssteuereinheit die Anwendung startet,
wobei die elektronische Vorrichtung (1) **dadurch gekennzeichnet ist, dass**
die Sicherheitssteuereinheit (105) eine Sicherheitseinstellung für die Kommunikation auf eine Einstellung vor dem Start der Anwendung zurücksetzt, wenn eine vorgegebene Bedingung erfüllt ist, nachdem die Anwendung gestartet wurde,
wenn von der anderen elektronischen Vorrichtung eine Nachricht für eine Teilnahme an der Community empfangen wird, ein Benutzer der anderen elektronischen Vorrichtung als Teilnehmer der Community gesetzt wird,
persönliche Information des an der Community teilnehmenden Benutzers und Information über die andere elektronische Vorrichtung in die Speichereinheit der elektronischen Vorrichtung geschrieben werden;
die Sicherheitseinstellung, die vor dem Start der Anwendung zurückgesetzt wurde, eine einer jeweiligen Anwendung zugeordnete Sicherheitseinstellung ist;
wenn die vorgegebene Bedingung erfüllt ist, die persönliche Information und die Information über die andere elektronische Vorrichtung von der Speichereinheit der elektronischen Vorrichtung gelöscht werden; und
die vorgegebene Bedingung eine Bedingung aufweist, gemäß der die Anzahl von Benutzern, die im Community-System teilnehmen, eine vorgegebene Anzahl erreicht; und eine Bedingung, gemäß der ein Zugriff von der anderen elektronischen Vorrichtung auf Daten erfasst wird, die von Daten für die Anwerbung verschieden sind.

2. Elektronische Vorrichtung (1) nach Anspruch 1, wobei die Sicherheitssteuereinheit (105) die Sicherheitseinstellung für die Kommunikation auf die Einstellung vor dem Start der Anwendung zurücksetzt, wenn eine vorgegebene Zeit verstrichen ist, nachdem die Anwendung eine Anwerbung startet.

3. Elektronische Vorrichtung (1) nach Anspruch 1 oder 2, wobei die Sicherheitssteuereinheit (105) die Sicherheitseinstellung für die Kommunikation auf die Einstellung vor dem Start der Anwendung zurücksetzt, wenn eine Manipulation zum Beenden der Anwerbung durch die Anwendung erfolgt.

4. Elektronische Vorrichtung (1) nach einem der Ansprüche 1 bis 3, wobei die Sicherheitssteuereinheit (105) die Sicherheitseinstellung für die Kommunikation auf die Einstellung vor dem Start der Anwendung zurücksetzt, wenn sich die elektronische Vorrichtung über mindestens eine vorgegebene Strecke von einer Position bewegt, an der die Anwendung die Anwerbung startet.

5. Elektronische Vorrichtung (1) nach einem der Ansprüche 1 bis 4, mit einer Beschleunigungserfassungseinheit (109), die die Beschleunigung der elektronischen Vorrichtung erfasst,
wobei die Sicherheitssteuereinheit (105) die Sicherheitseinstellung für die Kommunikation auf die Einstellung vor dem Start der Anwendung zurücksetzt, wenn die unter Verwendung der Beschleunigungserfassungseinheit erfasste Beschleunigung eine vorgegebene Bedingung erfüllt.

6. Elektronische Vorrichtung (1) nach einem der Ansprüche 1 bis 5, mit einer Geschwindigkeitserfassungseinheit (108), die eine Geschwindigkeit der elektronischen Vorrichtung erfasst,
wobei die Sicherheitssteuereinheit (105) die Sicherheitseinstellung für die Kommunikation auf die Einstellung vor dem Start der Anwendung zurücksetzt, wenn die unter Verwendung der Geschwindigkeitserfassungseinheit erfasste Geschwindigkeit eine vorgegebene Bedingung erfüllt.

7. Elektronische Vorrichtung (1) nach einem der Ansprüche 1 bis 6, wobei die Speichereinheit eine Verbindungsabstandseinstellung für eine Kommunikation nur mit einer anderen elektronischen Vorrichtung, die sich innerhalb eines vorgegebenen Abstands von der elektronischen Vorrichtung befindet, als die Sicherheitseinstellungsinformation speichert, und wobei,
wenn die Ausführungssteuereinheit die Anwendung startet, die Sicherheitssteuereinheit (105) eine Steuerung für eine Kommunikation nur mit einer anderen elektronischen Vorrichtung ausführt, die sich innerhalb des vorgegebenen Abstands von der elektronischen Vorrichtung befindet, falls die Verbindungsabstandseinstellung für die Anwendung, die gestartet worden ist, gesetzt ist.

8. Sicherheitssteuerungsverfahren mit den Schritten:
Starten und Ausführen einer Anwendung unter mehreren Anwendungen, die verwendet werden, um mit einer anderen elektronischen Vorrichtung zu kommunizieren und einen Benutzer für eine Teilnahme an einer Community anzuwerben, durch eine elektronische Vorrichtung,
wobei ein Community-System dafür konfiguriert ist, die elektronische Vorrichtung und die andere elektronische Vorrichtung einzubinden;
Lesen von Einstellungsinformation, die der Anwendung zugeordnet ist, die gestartet worden ist, von einer Speichereinheit, die jeder Anwendung zugeordnete Sicherheitseinstellungsinformation für die Kommunikation speichert, durch die elektronische Vorrichtung; und
Steuern der Sicherheit für die Kommunikation basierend auf der gelesenen Einstellungsinformation,
wobei das Sicherheitssteuerungsverfahren **dadurch gekennzeichnet ist, dass**
eine Sicherheitseinstellung für die Kommunikation auf eine Einstellung vor dem Start der Anwendung zurückgesetzt wird, wenn eine vorgegebene Bedingung erfüllt ist, nachdem die Anwendung gestartet wurde,
wenn eine Nachricht zur Teilnahme an der Community von der anderen elektronischen Vorrichtung empfangen wird, ein Benutzer der anderen elektronischen Vorrichtung als Teilnehmer der Community gesetzt wird,
persönliche Information des an der Community teilnehmenden Benutzers und Information über die andere elektronische Vorrichtung in die Speichereinheit der elektronischen Vorrichtung geschrieben werden,
die Sicherheitseinstellung, die auf die Einstellung vor dem Start der Anwendung zurückgesetzt wird, eine jeder Anwendung zugeordnete Sicherheitseinstellung ist, und
wenn die vorgegebene Bedingung erfüllt ist, die persönliche Information und die Information über die andere elektronische Vorrichtung aus der Speichereinheit der elektronischen Vorrichtung gelöscht werden,
wobei die vorgegebene Bedingung eine Bedingung aufweist, gemäß der die Anzahl von Benutzern, die im Community-System teilnehmen, eine vorgegebene Anzahl erreicht, und eine Bedingung, gemäß der ein Zugriff von der anderen elektronischen Vorrichtung auf Daten erfasst wird, die von Daten für eine Anwerbung verschieden sind.

9. Programm, das einen Computer einer elektronischen Vorrichtung veranlasst, auszuführen:
eine Ausführungssteuerungsfunktion, die eine Anwendung unter mehreren Anwendungen, die für eine Kommunikation mit einer anderen elektronischen Vorrichtung und zum Anwerben eines Benutzers für die Teilnahme an einer Community verwendet werden, startet und ausführt,
wobei ein Community-System dafür konfiguriert ist, die elektronische Vorrichtung und die andere elektronische Vorrichtung einzubinden; und
eine Sicherheitssteuerungsfunktion, die Einstellungsinformation, die der Anwendung zugeordnet ist, die gestartet wurde, von einer Speichereinheit liest, die jeder Anwendung zugeordnete Sicherheitseinstellungsinformation für die Kommunikation speichert und die Sicherheit für die Kommunikation basierend auf der gelesenen Einstellungsinformation steuert,
wobei das Programm **dadurch gekennzeichnet ist, dass**
die Sicherheitssteuerungsfunktion eine Sicherheitseinstellung für die Kommunikation auf eine Einstellung vor dem Start der Anwendung zurücksetzt, wenn eine vorgegebene Bedingung erfüllt ist, nachdem die Anwendung gestartet wurde;
wenn eine Nachricht zur Teilnahme an der Community von der anderen elektronischen Vorrichtung empfangen wird, ein Benutzer der anderen elektronischen Vorrichtung als Teilnehmer der Community gesetzt wird;
persönliche Information des an der Community teilnehmenden Benutzers und Information über die andere elektronische Vorrichtung in die Speichereinheit der elektronischen Vorrichtung geschrieben werden;
die Sicherheitseinstellung, die auf die Einstellung vor dem Start der Anwendung zurückgesetzt wird, eine der jeweiligen Anwendung zugeordnete Sicherheitseinstellung ist;
wenn die vorgegebene Bedingung erfüllt ist, die persönliche Information und die Information über die andere elektronische Vorrichtung von der Speichereinheit der elektronischen Vorrichtung gelöscht werden; und
die vorgegebene Bedingung eine Bedingung aufweist, gemäß der die Anzahl von Benutzern, die an dem Community-System teilnehmen, eine vorgegebene Anzahl erreicht, und eine Bedingung, gemäß der ein Zugriff von der anderen elektronischen Vorrichtung auf Daten erfasst wird, die von Daten für eine Anwerbung verschieden sind.

## Revendications

1. Dispositif électronique (1) comprenant :
une unité de communication (103) qui communique avec un autre dispositif électronique (2) ;
une unité de stockage (107) qui stocke une information de réglage de sécurité pour une communication correspondant à chaque application ;
une unité de commande d'exécution (104) qui démarre et exécute une application parmi une pluralité d'applications utilisées pour communiquer avec l'autre dispositif électronique et recruter un utilisateur pour participer à une communauté, où un système de communauté est configuré pour inclure le dispositif électronique et l'autre dispositif électronique ; et
une unité de commande de sécurité (105) qui lit l'information de réglage correspondant à l'application qui a été démarrée depuis l'unité de stockage et commande la sécurité pour une communication à l'aide de l'unité de communication sur la base de l'information de réglage lue lorsque l'unité de commande d'exécution démarre l'application,
dans lequel le dispositif électronique (1) est **caractérisé en ce que**
l'unité de commande de sécurité (105) retourne un réglage de sécurité pour la communication à un réglage avant que l'application ne soit démarrée lorsqu'une condition prédéterminée est satisfaite après que l'application a été démarrée,
lorsqu'un message pour une participation à la communauté est reçu depuis l'autre dispositif électronique, un utilisateur de l'autre dispositif électronique est réglé en tant que participant à la communauté,
une information personnelle de l'utilisateur participant à la communauté et une information sur l'autre dispositif électronique sont écrites dans l'unité de stockage du dispositif électronique,
le réglage de sécurité retourné au réglage avant que l'application ne soit démarrée est un réglage de sécurité correspondant à chaque application,
lorsque la condition prédéterminée est satisfaite, l'information personnelle et l'information sur l'autre dispositif électronique sont supprimées depuis l'unité de stockage du dispositif électronique, et
la condition prédéterminée comprend une condition dans laquelle le nombre d'utilisateurs qui participent au système de communauté atteint un nombre prédéterminé ; et une condition dans laquelle un accès depuis l'autre dispositif électronique à une donnée autre qu'une donnée pour un recrutement est détectée.

2. Dispositif électronique (1) selon la revendication 1, dans lequel l'unité de commande de sécurité (105) retourne le réglage de sécurité pour la communication au réglage avant que l'application ne soit démarrée lorsqu'une durée prédéterminée passe après que l'application a démarré le recrutement.

3. Dispositif électronique (1) selon la revendication 1 ou 2, dans lequel l'unité de commande de sécurité (105) retourne le réglage de sécurité pour la communication au réglage avant que l'application ne soit démarrée lorsqu'une manipulation utilisée pour achever un recrutement de l'application a été réalisée.

4. Dispositif électronique (1) selon l'une quelconque des revendications 1 à 3, dans lequel l'unité de commande de sécurité (105) retourne le réglage de sécurité pour la communication au réglage avant que l'application ne soit démarrée lorsque le dispositif électronique déplace une distance prédéterminée ou davantage depuis une position à laquelle l'application démarre un recrutement.

5. Dispositif électronique (1) selon l'une quelconque des revendications 1 à 4, comprenant une unité de détection d'accélération (109) qui détecte une accélération du dispositif électronique,
dans lequel l'unité de commande de sécurité (105) retourne le réglage de sécurité pour la communication au réglage avant que l'application ne soit démarrée lorsque l'accélération détectée à l'aide de l'unité de détection d'accélération satisfait une condition prédéterminée.

6. Dispositif électronique (1) selon l'une quelconque des revendications 1 à 5, comprenant une unité de détection de vitesse (108) qui détecte une vitesse du dispositif électronique,
dans lequel l'unité de commande de sécurité (105) retourne le réglage de sécurité pour la communication au réglage avant que l'application ne soit démarrée lorsque la vitesse détectée à l'aide de l'unité de détection de vitesse satisfait une condition prédéterminée.

7. Dispositif électronique (1) selon l'une quelconque des revendications 1 à 6, dans lequel l'unité de stockage stocke un réglage de distance de connexion qui communique uniquement avec un autre dispositif électronique présent à l'intérieur d'une distance prédéterminée depuis le dispositif électronique en tant qu'information de réglage de sécurité, et
lorsque l'unité de commande d'exécution démarre l'application, l'unité de commande de sécurité (105) réalise une commande pour communiquer uniquement avec l'autre dispositif électronique présent à l'intérieur de la distance prédéterminée depuis le dispositif électronique dans le cas où le réglage de distance de connexion est réglé pour l'application qui a été démarrée.

8. Procédé de commande de sécurité comprenant :
le démarrage et l'exécution, par un dispositif électronique, d'une application parmi une pluralité d'applications utilisées pour communiquer avec un autre dispositif électronique et recruter un utilisateur pour participer à une communauté, où un système de communauté est configuré pour inclure le dispositif électronique et l'autre dispositif électronique ;
la lecture, par le dispositif électronique, d'une information de réglage correspondant à l'application qui a été démarrée depuis une unité de stockage qui stocke une information de réglage de sécurité pour une communication correspondant à chaque application ; et
une commande de sécurité pour une communication sur la base de l'information de réglage lue,
dans lequel le procédé de commande de sécurité est **caractérisé en ce que**
un réglage de sécurité pour la communication est retourné à un réglage avant que l'application ne soit démarrée lorsqu'une condition prédéterminée est satisfaite après que l'application a été démarrée,
lorsqu'un message pour une participation à la communauté est reçu depuis l'autre dispositif électronique, le réglage d'un utilisateur de l'autre dispositif électronique en tant que participant à la communauté,
l'écriture d'une information personnelle de l'utilisateur participant à la communauté et d'une information sur l'autre dispositif électronique dans l'unité de stockage du dispositif électronique,
le réglage de sécurité retourné au réglage avant que l'application ne soit démarrée est un réglage de sécurité correspondant à chaque application,
lorsque la condition prédéterminée est satisfaite, la suppression de l'information personnelle et de l'information sur l'autre dispositif électronique depuis l'unité de stockage du dispositif électronique, et
la condition prédéterminée comprenant une condition dans laquelle le nombre d'utilisateurs qui participent au système de communauté atteint un nombre prédéterminé ; et une condition dans laquelle un accès depuis l'autre dispositif électronique à une donnée autre qu'une donnée pour un recrutement est détectée.

9. Programme qui amène un ordinateur d'un dispositif électronique à exécuter :
une fonction de commande d'exécution qui démarre et exécute une application parmi une pluralité d'applications utilisées pour communiquer avec un autre dispositif électronique et recruter un utilisateur pour participer à une communauté, où un système de communauté est configuré pour inclure le dispositif électronique et l'autre dispositif électronique ; et
une fonction de commande de sécurité qui lit une information de réglage correspondant à l'application qui a été démarrée depuis une unité de stockage qui stocke une information de réglage de sécurité pour une communication correspondant à chaque application et commande la sécurité pour une communication sur la base de l'information de réglage lue,
dans lequel le programme est **caractérisé en ce que**
la fonction de commande de sécurité retourne un réglage de sécurité pour la communication à un réglage avant que l'application ne soit démarrée lorsqu'une condition prédéterminée est satisfaite après que l'application a été démarrée,
lorsqu'un message pour une participation à la communauté est reçu depuis l'autre dispositif électronique, un utilisateur de l'autre dispositif électronique est réglé en tant que participant à la communauté,
une information personnelle de l'utilisateur participant à la communauté et une information sur l'autre dispositif électronique sont écrites dans l'unité de stockage du dispositif électronique,
le réglage de sécurité retourné au réglage avant que l'application ne soit démarrée est un réglage de sécurité correspondant à chaque application,
lorsque la condition prédéterminée est satisfaite, l'information personnelle et l'information sur l'autre dispositif électronique sont supprimées depuis l'unité de stockage du dispositif électronique, et
la condition prédéterminée comprend une condition dans laquelle le nombre d'utilisateurs qui participent au système de communauté atteint un nombre prédéterminé ; et une condition dans laquelle un accès depuis l'autre dispositif électronique à une donnée autre qu'une donnée pour un recrutement est détectée.
